# EUROPÄISCHE PATENTSCHRIFT

(11) **EP 2 141 501 B1**
(45) Veröffentlichungstag und Bekanntmachung des Hinweises auf die Patenterteilung: **12.09.2018**
(21) Anmeldenummer: 09008004.5
(22) Anmeldetag: 18.06.2009
(51) Int. Cl.: G01N 35/02

(54) **Vorrichtung zum Zuführen von Probenbehältern mit einer zu behandelnden Analysenprobe zu einem Behandlungsgerät**
Device for feeding sample containers into a treatment device with a sample for analysis that is to be treated
Dispositif de transport de récipients d'échantillons dotés d'un échantillon d'analyse à traiter vers un appareil de traitement

(30) Priorität: 30.06.2008 DE 102008030330
(43) Veröffentlichungstag der Anmeldung: 06.01.2010
(73) Patentinhaber: Andreas Hettich GmbH & Co. KG, 78532 Tuttlingen (DE)
(72) Erfinder: Eberle, Klaus-Günter, 78532 Tuttlingen (DE)
(74) Vertreter: Puschmann Borchert Bardehle Patentanwälte Partnerschaft mbB

(56) Entgegenhaltungen:
- EP-A1- 1 106 542
- DE-A1- 19 819 811
- DE-A1-102006 041 695
- GB-A- 2 435 098
- US-A- 5 351 801
- US-A- 5 623 415
- US-A- 5 972 295
- US-A- 6 080 364
- US-A- 6 151 535
- US-A1- 2006 286 619
- US-A1- 2008 003 137
- US-B1- 6 709 634

## Beschreibung

Die Erfindung betrifft eine Vorrichtung zum Zuführen von Probenbehältern mit einer zu behandelnden Analysenprobe zu einem Behandlungsgerät mit einem Förderer gemäß der im Oberbegriff des Anspruches 1 und mit zwei Förderern gemäß der im Oberbegriff des Anspruches 2 angegebenen Art.

Eine derartige Vorrichtung zum Zuführen von Probenbehältern mit einer zu behandelnden Analysenprobe zu einem Behandlungsgerät zum Behandeln der Analysenprobe, insbesondere mittels einer Zentrifuge, ist bereits seit längerem bekannt. Bei der bekannten Ausgestaltung dieser Vorrichtung ist zur Übergabe der Probenbehälter an die Vorrichtung eine Übergabestation vorgesehen, von der sich ein Förderer in Form eines Förderbandes für die Probenbehälter oder Träger zu einer von der Übergabestation separaten Übergabeeinrichtung erstreckt. Die Übergabeeinrichtung entnimmt die Probenbehälter oder Träger von dem Förderband und führt diese dem Behandlungsgerät zu.

Jeder Probenbehälter oder Träger weist dabei eine Kennzeichnung auf, welche sich auf die Analysenprobe und die damit zusammenhängende Behandlung durch das Behandlungsgerät bezieht. Bevor die Probenbehälter mit einer zu behandelnden Analysenprobe oder die Träger mittels der Übergabeeinrichtung dem Behandlungsgerät zugeführt werden, werden diese von einer der Übergabestation nachgeordneten Leseeinheit erfasst. Die Leseeinheit erfasst die jeweilige Kennzeichnung der Probenbehälter oder Träger, indem die damit durchzuführenden Maßnahmen bzw. Behandlungen ausgelesen werden. Die Daten werden einer Steuereinheit zugeführt. Anschließend wird der Probenbehälter mit der jeweiligen Analysenprobe oder der Träger mit dem Probenbehälter und der darin befindlichen Analysenprobe in das Behandlungsgerät, z. B. eine Zentrifuge, eingebracht. In dem Behandlungsgerät wird jeweils die in dem Probenbehälter angeordnete Analysenprobe entsprechend den von der Steuereinheit vorgegebenen Verfahrensschritten behandelt, beispielsweise zentrifugiert, die dem Probenbehälter und somit der Analysenprobe zugeordnet sind.

Anschließend wird der Probenbehälter oder der Träger mit dem Probenbehälter aus dem Behandlungsgerät von der Übergabeeinrichtung wieder entnommen und einem zweiten Förderband übergeben. Das zweite Förderband fördert die Probenbehälter oder die Träger zu einer von der Übergabestation separaten Entnahmestation, wo die Probenbehälter oder Träger manuell entnommen werden können.

Ein Träger weist dabei zumindest einen Probenbehälter mit einer Analysenprobe auf. Es sind jedoch Träger mit mehreren Probenbehältern üblich.

Die Probenbehälter oder die Träger können dabei nur der Reihenfolge nach, wie sie in die Übergabestation eingegeben wurden, von dem Behandlungsgerät behandelt und dem von den beiden Förderbändern gefördert werden. Nur in dieser Reihenfolge können die Probenbehälter oder Träger auch wieder an der Entnahmestation nacheinander entnommen werden.

Nachteilig bei diesen bekannten Vorrichtungen ist, dass die Reihenfolge zwingend durch die Reihenfolge der Eingabe vorgegeben ist. Eine Abarbeitung nach Prioritäten, Zusammenfassen von gleich zu behandelnden Probenbehältern oder Trägern in dem Behandlungsgerät ist nicht möglich.

Eine gattungsgemäße Vorrichtung mit einem Förderer zum Fördern wenigstens eines Probenbehälters oder eines wenigstens einen Probenbehälter enthaltenden Trägers ist aus der US 2008/0003137 bekannt. Die Vorrichtung umfasst eine Übergabestation zum Übergeben des Probenbehälters oder des Trägers an den Förderer sowie eine Identifiziereinheit zum Identifizieren des Probenbehälters. Der Förderer ist dabei zur Aufnahme mehrerer Probenbehälter und/oder Träger ausgebildet und bildet eine umlaufende Endlosförderbahn. Der Förderer verläuft horizontal. Die Übergabestation ist dabei im Hinblick auf den horizontal verlaufenden Förderer quer zur Förderrichtung des Förderers nach oben versetzt angeordnet. Ein Übergabeförderer zum Fördern des der Übergabestation übergebenen Probenbehälters oder des Trägers zum Förderer ist ebenfalls vorgesehen.

Die US 6 709 634 B1 offenbart eine gattungsgemäße Vorrichtung mit zwei Förderern zum Fördern wenigstens eines Probenbehälters oder eines wenigstens einen Probenbehälter enthaltenden Trägers. Die Vorrichtung umfasst dabei eine Übergabestation zum Übergeben des Probenbehälters oder des Trägers an einen Förderer. Eine von der Übergabestation separate Entnahmestation zur Entnahme des Probenbehälters oder des Trägers aus einem Förderer ist ebenfalls vorgesehen. Des Weiteren ist eine von der Übergabestation separate Übergabeeinrichtung zum Entnehmen des Probenbehälters oder des Trägers mit Probenbehälter aus einem Förderer zum Weiterführen an das Behandlungsgerät und zum Übergeben an einen Förderer nach dem Behandeln der Analyseprobe des Probenbehälters in dem Behandlungsgerät vorgesehen. Die Förderer sind dabei zur Aufnahme mehrerer Probenbehälter und/oder Träger ausgebildet und bilden jeweils eine umlaufende Endlosförderbahn. Die Förderer verlaufen horizontal und die Übergabestation ist im Hinblick auf einen horizontal verlaufenden ersten Förderer quer zur Förderrichtung des Förderers nach oben versetzt angeordnet. Ein Übergabeförderer ist zum Fördern des der Übergabestation übergebenen Probenbehälters oder des Trägers zu dem ersten Förderer vorgesehen. Der Übergabeförderer ist durch eine Fallstrecke gebildet ist.

Aus der DE 100 41 230 A1 ist eine Vorrichtung zur Behandlung von Objekten, insbesondre von zytologischen oder histologischen Präparaten bekannt. Die offenbarte Vorrichtung umfasst mehrere Bearbeitungsstationen und eine Transporteinrichtung zum Verbringen der Objekte in die Bearbeitungsstationen hinein und aus den Bearbeitungsstationen heraus, wobei zum Beladen mit zu behandelnden Objekten bzw. mit die zu behandelnden Objekte tragenden Objektträgern eine Beschickungsstation und zur Entnahme der behandelten Objekte bzw. der die behandelten Objekte tragenden Objektträger eine Entnahmestation vorgesehen ist. Die Vorrichtung zeichnet sich dadurch aus, dass der Beschickungsstation und/oder der Entnahmestation eine vorgebbare Anzahl von Bearbeitungsstationen fest oder variabel zuordenbar sind.

Ein weiteres Problem bei den bekannten Vorrichtungen ist auch, dass Probenbehälter mit einer Analysenprobe oder Träger in den Förderumlauf gelangen, deren Kennzeichnung nicht richtig oder nicht gelesen worden ist, die somit nicht behandelbar sind, die Durchförderung beeinträchtigen und sperren können. Der Durchsatz der Vorrichtung als auch des Behandlungsgerätes wird hierdurch erheblich beeinträchtigt.

Aus der DE 10 2006 041 695 A1 ist eine Vorrichtung zum Zuführen von Probenbehältern mit einer zu behandelnden Analyseprobe bekannt. Es ist eine kombinierte Übergabe- und Entnahmestation vorgesehen, welche über Weichen und Förderbandsegmenten Proben aus einem Förderband einspeisen in die kombinierte Übergabe- und Entnahmestation und ausbringen. Die kombinierte Übergabe- und Entnahmestation ist dabei horizontal in zum Förderband versetzt in angeordnet.

Aus der US 5,351,801 A ist eine Vorrichtung zum Zuführen von Probenbehältern mit einer zu behandelnden Analysenprobe zu einem Behandlungsgerät bekannt. Diese Vorrichtung ist jedoch sehr aufwändig und somit kostspielig ausgebildet.

Der Erfindung liegt die Aufgabe zugrunde, bei einer Vorrichtung mit einem Förderer der im Oberbegriff des Anspruchs 1 angegebenen Art und bei einer Vorrichtung mit zumindest zwei Förderern der im Oberbegriff des Anspruches 2 angegebenen Art unter Vermeidung der genannten Nachteile diese einfacher auszubilden und den Durchsatz der Vorrichtung zu erhöhen.

Diese Aufgabe wird durch die kennzeichnenden Merkmale des Anspruchs 1 in Verbindung mit seinen Oberbegriffsmerkmalen sowie durch die kennzeichnenden Merkmale des Anspruchs 2 in Verbindung mit seinen Oberbegriffsmerkmalen gelöst.

Vorteilhafte Weiterbildungen der Erfindung bilden die Gegenstände der Unteransprüche.

Der Erfindung liegt die Erkenntnis zugrunde, dass durch eine schnelle Entfernung von nicht behandelbarer Probenbehälter z. B, wegen falsche Kennzeichnung mit richtig lesbarer Probebehälter, aus der Vorrichtung der Durchsatz der Vorrichtung erhöht werden kann.

Nach der Erfindung ist im Hinblick auf die Vorrichtung mit einem Förderer daher vorgesehen: eine von der Übergabestation separate Übergabeeinrichtung zum Entnehmen des Probenbehälters oder des Trägers mit Probenbehälter aus dem Förderer zum Weiterführen an das Behandlungsgerät und zum Übergeben an den Förderer nach dem Behandeln der Analyseprobe des Probenbehälters in dem Behandlungsgerät sowie eine von der Übergabestation separaten Entnahmestation zur Entnahme des Probenbehälters oder Trägers aus dem Förderer. Der Übergabeförderer ist dabei durch eine Fallstrecke gebildet. An der Übergabestation ist zudem eine Aufnahme zum Einsetzen des Probenbehälters oder des Trägers vorgesehen und die Aufnahme ist der Außenform des Probenbehälters oder des Trägers angepasst und durch ein rohrförmiges Aufnahmeteil gebildet. Die Aufnahme ist mit einem seitlichen Fenster für die Identifizierung einer Kennzeichnung des Probenbehälters oder des Trägers durch die Identifiziereinheit versehen.

Nach der Erfindung ist im Hinblick auf die Vorrichtung mit zumindest zwei Förderern vorgesehen: eine Identifiziereinheit zum Identifizieren des Probenbehälters und an der Übergabestation eine Aufnahme zum Einsetzen des Probenbehälters oder des Trägers. Die Aufnahme ist der Außenform des Probenbehälters oder des Trägers angepasst und durch ein rohrförmiges Aufnahmeteil gebildet ist und die Aufnahme mit einem seitlichen Fenster für die Identifizierung einer Kennzeichnung des Probenbehälters oder des Trägers durch die Identifiziereinheit versehen ist.

In vorteilhafter Weise ist hierdurch sichergestellt, dass ein an der Übergabestation nicht identifizierter und nicht weiter geförderter Probenbehälter oder Träger in einfacher Weise von der Übergabestation wieder entnommen werden kann. Der Nutzer erkennt sofort die fehlerhafte Kennzeichnung oder die schlechte Ausrichtung der Probe zur Identifiziereinheit. Dadurch wird in einfacher Weise ein Förderer von Probenbehältern frei gehalten, welche nicht identifizierbar sind oder deren Kennzeichnung nicht in Ordnung ist.

Durch die zwei Förderer kann der Durchsatz erheblich erhöht werden. Während des Entladens oder des Beladens des einen Förderers kann bereits ein Fördern mit dem weiteren Förderer stattfinden. Dies führt zu einer erheblichen Leistungssteigerung.

Die Aufnahme zum Einsetzen der Probenbehälter oder Träger an der Übergabestation ermöglicht eine genaue Positionierung des Probenbehälters oder Trägers, so dass auch die Identifizierungswahrscheinlichkeit der Probenbehälter oder Träger verbessert wird. Hierbei ist die Aufnahme der Außenform des Probenbehälters oder Trägers angepasst. Dadurch, dass die Aufnahme durch ein rohrförmiges Aufnahmeteil gebildet ist, ist diese einfach herstellbar und kann je nach Art der Probenbehälter ausgetauscht werden. Da die Aufnahme mit einem seitlichen Fenster für die Identifizierung der Kennzeichnung des Probenbehälters oder Trägers durch die Identifiziereinheit versehen ist, wird die sichere Anordnung des Probenbehälters oder Trägers als auch eine einfache Identifizierung durch die Identifiziereinheit gewährleistet.

Beispielsweise verläuft dabei ein erster horizontaler Förderer von der Übergabestation zur Übergabeeinrichtung. Ein zweiter horizontaler Förderer kann dabei von der Übergabeeinrichtung zur Entnahmestation verlaufen. Die von der Übergabestation separate Entnahmestation ist zur Entnahme des Probenbehälters oder des Trägers aus dem zweiten Förderer ausgebildet.

Vorzugsweise weist der Förderer Aufnahmen zum Aufnehmen einzelner Probenbehälter oder Träger von Probenbehältern auf. In diese Aufnahme wird der Probenbehälter oder Träger dabei einfach ein- und ausgebracht. Die Aufnahmen für den Probenbehälter oder Träger können dabei vor allem in einer Linie angeordnet sein.

Ein weiteres Bestreben ist, dass nur Probenbehälter oder Träger in den Förderkreislauf und in das Behandlungsgerät gelangen, welche vorher eindeutig identifiziert wurden.

Der Übergabeförderer ist zum Fördern eines der Übergabestation übergebenen Probenbehälters zum Förderer vorgesehen, bei dem die Identifiziereinheit im Bereich des Übergabeförderers angeordnet ist und mit dem Übergabeförderer so zusammen wirkt, dass der Probenbehälter oder Träger erst nach seiner Identifizierung zum Förderer gefördert wird.

Hierdurch ist gewährleistet, dass nur solche Probenbehälter in den Förderumlauf gelangen, die identifiziert sind und deren Kennzeichnung einer zugehörigen Steuereinrichtung bekannt ist. Deshalb kann bei der Erfindung die Förderung der Probenbehälter mit einer zu behandelnden Analysenprobe oder der Träger ungestört und somit leistungsfähiger stattfinden.

Wenn die Übergabestation im Hinblick auf die Entnahmestation nach oben versetzt ist, lässt sich ein Übergabeförderer einfacher Bauart verwirklichen, z. B. dadurch, dass der zweite Förderer durch eine Fallstrecke gebildet ist und deshalb ein aufwendiger aktiver Förderer entfällt.

Es lässt sich auch ein größerer und handhabungstechnisch brauchbarer Freiraum für die Entnahmestation gewinnen, wenn die Übergabestation in Förderrichtung des Förderers im Hinblick auf die Entnahmestation versetzt ist.

Gemäß einer bevorzugten Ausführungsform der Erfindung ist die Identifiziereinheit in Förderrichtung des zweiten Förderers vor dem Förderer angeordnet ist, vorzugsweise benachbart zur Übergabestation. Insbesondere kann dem Fenster gegenüberliegend die Identifiziereinheit angeordnet sein.

Die Identifiziereinheit kann insbesondere durch ein Lesegerät gebildet sein, insbesondere in Form einer manuell abhebbaren und wieder ablegbaren Einheit.

Vorzugsweise kann eine Halterung vorgesehen sein, in der die Identifiziereinheit wahlweise entnehmbar gelagert ist.

Gemäß einer Ausführungsform der Erfindung bildet die Vorrichtung und das Behandlungsgerät eine Baueinheit.

Weitere Vorteile, Merkmale und Anwendungsmöglichkeiten der Erfindung einer Vorrichtung zum Zuführen von Probenbehältern mit einer zu behandelnden Analysenprobe ergeben sich aus der nachfolgenden Beschreibung in Verbindung mit dem in der Zeichnung dargestellten Ausführungsbeispiel.

Die Erfindung wird im Folgenden anhand des in der Zeichnung dargestellten Ausführungsbeispiels näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet. In der Zeichnung bedeutet;
- Fig. 1: eine perspektivische Ansicht von schräg oben auf die Vorrichtung zum Zuführen von Probenbehältern oder Trägern mit einer zu behandelnden Analysenprobe zu einem Behandlungsgerät nach der Erfindung;
- Fig. 2: eine perspektivische Ansicht von schräg oben aus einer mittleren Blickposition der Vorderseite;
- Fig. 3: eine Draufsicht auf einen Horizonttalschnitt der Vorrichtung mit den beiden Förderern, und
- Fig. 4: eine Explosionsdarstellung der Übergabestation von Fig. 2.

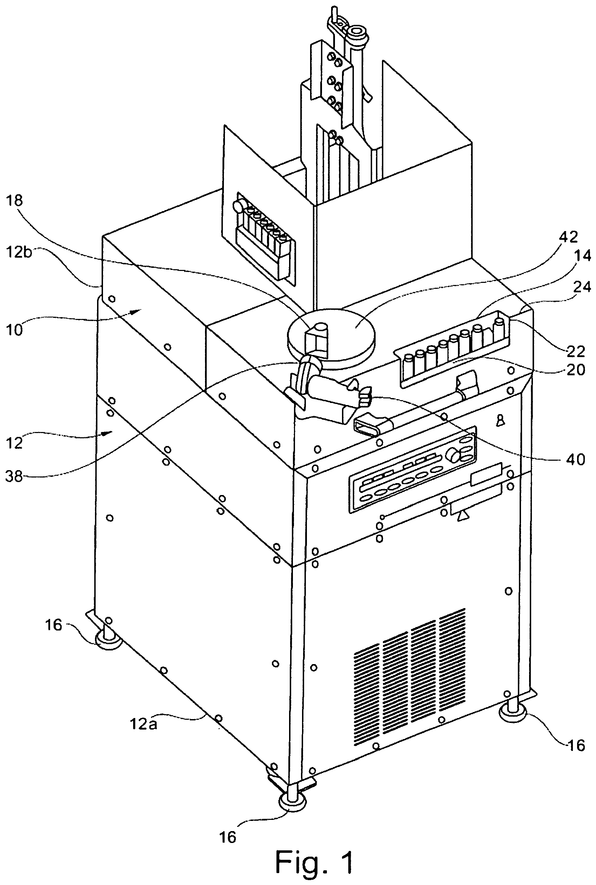

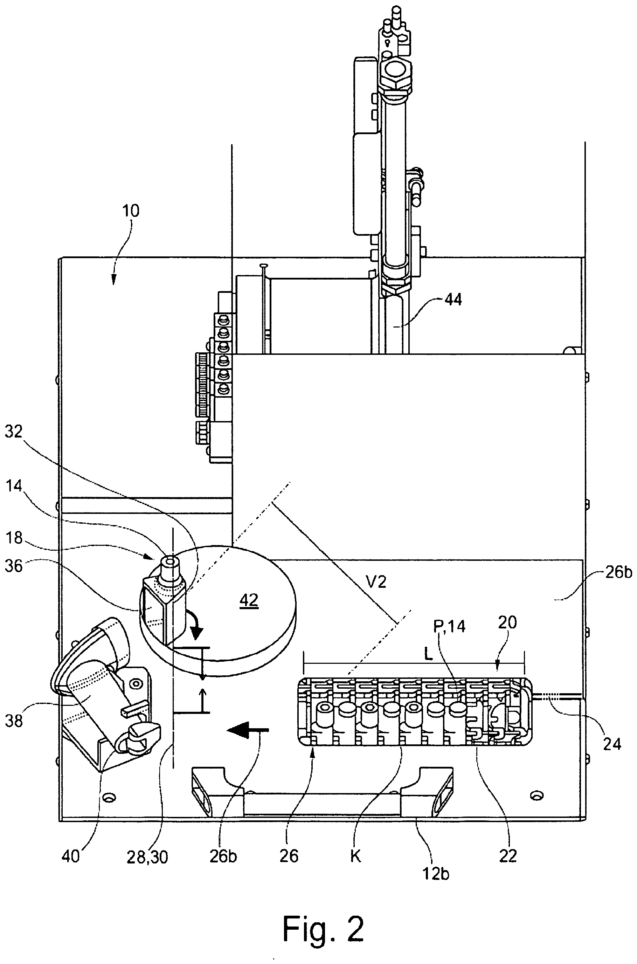

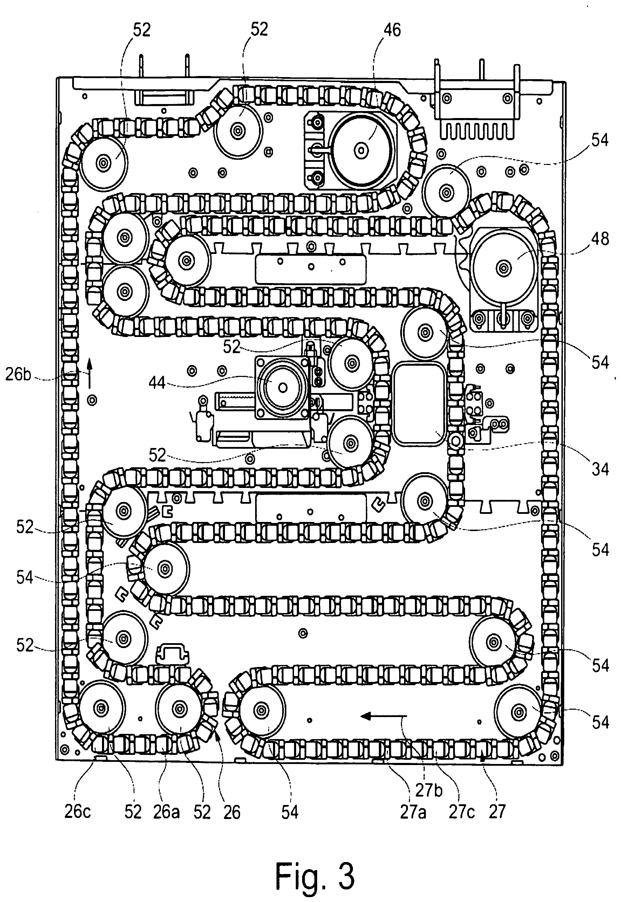

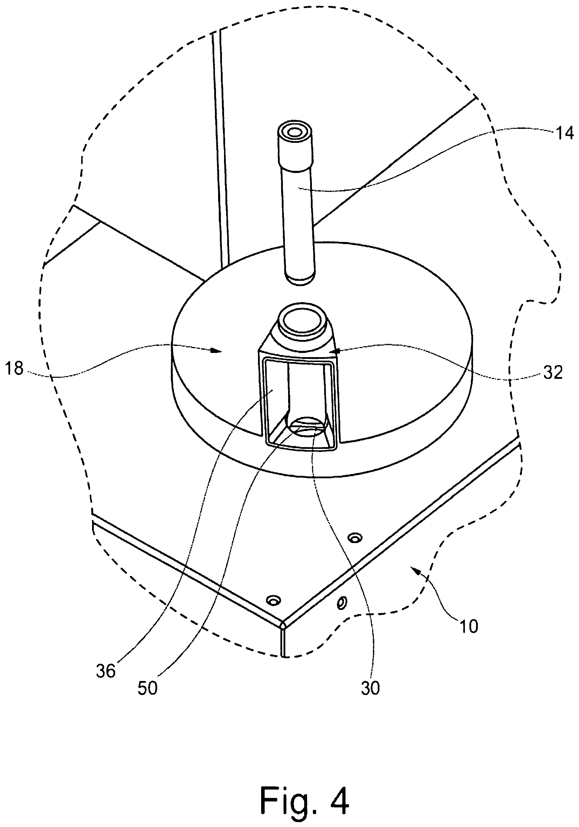

In den Figuren 1 bis 4 ist eine Ausführungsform einer Vorrichtung 10 nach der Erfindung dargestellt, die in ihrer Gesamtheit mit 10 bezeichnet ist. Die Vorrichtung 10 ist integraler Bestandteil eines Behandlungsgerätes 12. Die Vorrichtung 10 kann auch als separater Aufsatz ausgebildet sein. Bei dem Behandlungsgerät 12 handelt es sich bei diesem Ausführungsbeispiel um eine Zentrifuge zum Zentrifugieren und somit Trennen von Bestandteilen der Analysenproben P in den Probenbehältern 14. Die Analysenprobe P kann insbesondere durch Blut gebildet sein. Alternativ können die Probenbehälter 14 auch in Trägern, sogenannte Racks, eingebracht sein, die durch die Vorrichtung 10 zum Behandlungsgerät 12 gefördert werden. Die Träger können dabei einzelne oder mehrere Probenbehälter 14 mit Analysenprobe P enthalten. Bei der folgenden Ausführungsform werden die Probenbehälter 14 jedoch ohne Träger durch die Vorrichtung 10 zum Behandlungsgerät 12 und wieder zurück gefördert.

Der Probenbehälter 14 mit der zu behandelnden Analysenprobe P wird beispielsweise durch ein hohlzylinderförmiges Gefäß gebildet, das jeweils mit einem Deckel verschlossen ist. Die Probenbehälter 14 mit der darin befindlichen Analysenprobe P sind zu deren Identifizierung mit einer Kennzeichnung K versehen. Dies ist z. B. auf der Außenfläche bzw. Zylindermantelfläche des Probenbehälters 14 angebracht. In dieser Kennzeichnung K können z. B. die Zugehörigkeit, die Art der Analysenprobe und das Datum enthalten sein. Die Kennzeichnung K kann beispielsweise durch einen Barcode verwirklicht werden.

Die Vorrichtung 10 bildet vorzugsweise einen oberen Abschnitt des Behandlungsgerätes 12 mit einem auf höhenverstellbaren Füßen 16 stehenden Gehäuse 12a. Die Vorrichtung 10 ist z. B. ein Flachgehäuse 12b, das einen Deckel des Gehäuses 12a bildet. Die Vorrichtung 10 kann dabei starr bzw. unlösbar oder lösbar mit dem Gehäuse 12a verbunden sein.

Die Vorrichtung 10 weist zur Aufnahme und Abgabe der Probenbehälter 14 mit einer zu behandelnden Analysenprobe P eine Übergabestation 18 und eine Entnahmestation 20 auf. Beide befinden sich zwecks Verbesserung der Handhabbarkeit im vorderen Bereich der Vorrichtung 10.

Von der Übergabestation 18 führt ein umlaufender, als Endlosband ausgebildeter erster Förderer 26 zu einer Übergabeeinrichtung 44. Die Übergabeeinrichtung 44 förder die Probenbehälter 14 in das Behandlungsgerät 12 und nach dem Behandeln zu einem zweiten umlaufenden, als Endlosband ausgebildeten Förderer 27. Der zweite Förderer 27 verläuft von der Übergabeeinrichtung 44 zu der Entnahmestation 20.

Die Entnahmestation 20 ist durch eine Ausnehmung 22 im Bereich der oberen Vorderkante 24 des Flachgehäuses 12b gebildet, so dass die Ausnehmung 22 oberseitig und vorderseitig offen ist. Gemäß einer alternativen Ausführungsform kann dies auch durch eine insbesondere automatische Klappe abgedeckt sein. Mehrere Probenbehälter 14 können dabei gleichzeitig in der Entnahmestation 20 eingesehen und parallel entnommen werden. In dem Flachgehäuse 12b ist durch die Ausnehmung 22 der zweiter Förderer 27 sichtbar.

Eine Öffnung 34 zum Behandlungsgerät 12, nämlich die oben angegebene Zentrifuge für die Probenbehälter 14 mit jeweils einer zu behandelnden Analysenprobe P, ist zwischen dem ersten und zweiten Förderer 26, 27 angeordnet. Die Übergabeeinrichtung 44 entnimmt die Probenbehälter 14 dem ersten Förderer 26 und übergibt diese durch die Öffnung 34 dem Behandlungsgerät 12. Nach dem Behandeln entnimmt die Übergabeeinrichtung 44 die Probenbehälter 14 wieder aus dem Behandlungsgerät 12 und übergibt diese dem zweiten Förderer 27.

Der erste und zweite Förderer 26, 27 sind als horizontal umlaufende Förderbahnen 26a ausgebildet. Die Förderbahn 26a des ersten Förderers 26 erstreckt sich von der Übergabestation 18 zu der Übergabeeinrichtung 44 und wieder zurück. Die Förderbahn 27a des zweiten Förderers 27 erstreckt sich von der Entnahmestation 20 zur Übergabestation 44 und wieder zurück. Die Entnahmestation 20 ist in der Förderrichtung 27b länglich ausgebildet, so dass auf der Länge L der Entnahmestation 20 mehrere Probenbehälter 14 mit einer zu behandelnden Analysenprobe P eingesehen werden können.

Der erste und zweite Förderer 26, 27 kann z. B. durch eine Gliederkette oder ein Förderband mit oberseitig offenen Ausnehmungen zum Aufnehmen der Probenbehälter 14 mit einer zu behandelnden Analysenprobe P gebildet sein.

Die Übergabestation 18 ist im Hinblick auf den ersten Förderer 26 quer zur Förderrichtung 26b, beim Ausführungsbeispiel nach oben, versetzt angeordnet und durch einen Übergabeförderer 28 für den Probenbehälter 14 mit der Analysenprobe P mit dem ersten Förderer 26 verbunden. Über den Übergabeförderer 28 wird der Probenbehälter 14 mit der Analysenprobe P von der Übergabestation 18 zum ersten Förderer 26 bewegt. Bei einem zur Förderrichtung 26b des ersten Förderers 26 vertikalen Versatz V1 nach oben ist der Übergabeförderer 28 durch eine Fallstrecke 30 gebildet.

Die Übergabestation 18 ist außerdem bezüglich der Entnahmestation 20 horizontal versetzt angeordnet, siehe den Versatz V2.

Zur Positionierung der jeweiligen Probenbehälter 14 mit der Analysenprobe P an der Übergabestation 18 ist eine Steckaufnahme 32 vorgesehen, in die der Probenbehälter 14 mit der Analysenprobe P von oben einsteckbar und dadurch positionierbar ist. Die Steckaufnahme 32 ist durch ein nach oben abstehendes rohrförmiges Aufnahmeteil 34 mit einem seitlichen Fenster 36, z. B. eine Ausnehmung, für die Kennzeichnung K gebildet. Die Kennzeichnung K ist in einer solchen Position an dem Probenbehälter 14 angeordnet ist, dass die Kennzeichnung K sich im in die Steckaufnahme 32 eingesetzten Zustand des Probenbehälters 14 im Bereich des Fensters 36 befindet. Dem Fenster 36 gegenüberliegend ist eine, z. B. pistolenförmige, Identifiziereinheit 38 angeordnet, vorzugsweise im vorderen linken Eckenbereich auf der Vorrichtung 10. Die Identifiziereinheit 38 kann z. B. ein Lesegerät sein und wahlweise einsteckbar und entnehmbar in einer Halterung 40 positioniert sein. Alternativ kann die Identifiziereinheit 38 auch fest eingebaut sein, also nicht entnehmbar ausgebildet sein. Die Steckaufnahme 32 kann sich z. B. von einem Sockel 42 nach oben erstrecken.

Der Boden der Steckaufnahme 32 lässt sich durch eine nicht dargestellte Steuervorrichtung eine Schließe 50 öffnen und schließen, so dass der Probenbehälter 14 bei einem Öffnen der Schließe 50 über die Fallstrecke 30 in den ersten Förderer 26 gelangt.

Der erste Förderer 26 wird von einem Motor 46 und der zweite Förderer 27 von einem Motor 48 angetrieben. Die Förderer werden über zahlreiche Reibräder 52 und 54 geführt, um ein möglichst langen Förderer 26, 27 zu bilden. Hierdurch entsteht ein Zwischenlager aber auch eine Art Puffer für das Behandlungsgerät 12.

Nachfolgend wird die Funktion der Vorrichtung 10 im Zusammenwirken mit dem Behandlungsgerät 12 beschrieben.

Eine zu behandelnde Analysenprobe P in einen Probenbehälter 14 eingebracht. Der Probenbehälter 14 wird der Vorrichtung 10 von einer Bedienungsperson durch Übergabe auf die Übergabestation 18 übergeben, wobei der Probenbehälter 14 in die Steckaufnahme 32 eingesetzt wird. Danach wird die Kennzeichnung K des Probenbehälters 14 durch die Identifiziereinheit 38 identifiziert. Wird die Kennzeichnung nicht erkannt, muss die Bedienperson den Probenbehälter 14 soweit ausrichten, dass die Kennzeichnung K erfasst wird. Erst danach wird der Proebenbehälter 14 durch Öffnen der Schließe 50 über die Fallstrecke 30 des Übergabeförderers 28 dem ersten Förderer 26 übergeben. Mit dem ersten Förderer 26 wird der Probenbehälter 14 dann der Übergabevorrichtung 44 und schließlich dem Behandlungsgerät 12 zugeführt.

Nach der Behandlung in dem Behandlungsgerät 12 wird der Probenbehälter 14 mittels Übergabevorrichtung 44 auf den zweiten Förderer 27 und über diesen wieder zur Entnahmestation 20 gefördert, wo der Probenbehälter 14 mit der Analysenprobe P entnommen werden kann.

Durch die Ausbildung der Förderer als umlaufende Endlosförderer werden unterschiedliche Reihenfolgen bei der Abarbeitung der Probenbehälter ermöglicht. Die Abarbeitung kann chaotisch erfolgen, nach vorgegeben Prioritäten, unter Berücksichtigung der Behandlungsschritte und ähnliches. Die Steuerung der Reihenfolge übernimmt eine Steuereinrichtung, welche mit der Identifiziereinheit 38 zusammenwirkt.

Durch Identifizierung der jeweiligen Probenbehälter 14 mit einer zu behandelnden Analysenprobe P vor deren Einbringung in den ersten Förderer 26 ist zudem eine kontrollierte Förderung der Probenbehälter 14 mit der Analysenprobe P auf einfache Weise gewährleistet. Es werden unkontrollierte Fehlläufe von Probenbehältern 14 von vornherein vermieden.

Die Folgeschritte nach dem Übergeben der Probenbehälter 14 mit der Analysenprobe P an den Übergabestation 18 bis zur Bereitstellung an die Entnahmestation 20 erfolgen vorzugsweise automatisch. Hierzu dient die Steuereinrichtung.

### Bezugszeichenliste

- 10: 10 Vorrichtung
- 12: Behandlungsgerät, Zentrifuge
- 14: Gefäß, Probenbehälter
- 16: Füße
- 18: Übergabestation
- 20: Entnahmestation
- 22: Ausnehmung
- 24: obere Vorderkante
- 26: erster Förderer
- 26a: Förderbahn
- 26b: Förderrichtung
- 26c: Aufnahme für den Probenbehälter
- 27: zweiter Förderer
- 27a: Förderbahn
- 27b: Förderrichtung
- 27c: Aufnahme für Probenbehälter
- 28: Übergabeförderer
- 30: Fallstrecke
- 32: Steckaufnahme, Aufnahme
- 34: Öffnung zum Behandlungsgerät
- 36: Fenster
- 38: Identifiziereinheit, Lesegerät
- 40: Halterung
- 42: Sockel
- 44: Übergabeeinrichtung
- 46: Motor des ersten Förderers
- 48: Motor des zweiten Förderers
- 50: Schließe
- 52: Reibrad des ersten Förderers
- 54: Reibrad des zweiten Förderers

- P: Probe
- B: Behandlungsgerät
- K: Kennzeichnung
- L: Länge der Ausnehmung 22
- V1: vertikaler Versatz
- V2: horizontaler Versatz

## Patentansprüche

1. Vorrichtung (10) zum Zuführen von Probenbehältern (14) mit einer zu behandelnden Analysenprobe (P) zu einem Behandlungsgerät (12) zum Behandeln der Analysenprobe (P), insbesondere zu einer Zentrifuge, mit zumindest
a) einem Förderer zum Fördern wenigstens eines Probenbehälters (14) oder eines wenigstens einen Probenbehälter (14) enthaltenden Trägers,
b) einer Übergabestation (18) zum Übergeben des Probenbehälters (14) oder des Trägers an den Förderer,
c) einer von der Übergabestation separaten Entnahmestation (20) zur Entnahme des Probenbehälters (14) oder Trägers aus dem Förderer,
d) einer von der Übergabestation separaten Übergabeeinrichtung (44) zum Entnehmen des Probenbehälters (14) oder des Trägers mit Probenbehälter (14) aus dem Förderer zum Weiterführen an das Behandlungsgerät (12) und zum Übergeben an den Förderer nach dem Behandeln der Analyseprobe (P) des Probenbehälters (14) in dem Behandlungsgerät,
e) einer Identifiziereinheit (38) zum Identifizieren des Probenbehälters (14), wobei der Förderer zur Aufnahme mehrerer Probenbehälter (14) oder Träger ausgebildet ist und eine umlaufende Endlosförderbahn bildet, der Förderer horizontal verläuft, die Übergabestation (18) im Hinblick auf den horizontal verlaufenden Förderer quer zur Förderrichtung des Förderers nach oben versetzt (V1) angeordnet ist, wobei ein Übergabeförderer (28) zum Fördern des der Übergabestation (18) übergebenen Probenbehälters (14) oder des Trägers zum Förderer vorgesehen ist und der Übergabeförderer (28) durch eine Fallstrecke (30) gebildet ist, und wobei an der Übergabestation (18) eine Aufnahme (32) zum Einsetzen des Probenbehälters (14) oder des Trägers vorgesehen ist und die Aufnahme (32) der Außenform des Probenbehälters (14) oder des Trägers angepasst und durch ein rohrförmiges Aufnahmeteil gebildet ist, wobei die Aufnahme (32) mit einem seitlichen Fenster (36) für die Identifizierung einer Kennzeichnung (K) des Probenbehälters (14) oder des Trägers durch die Identifiziereinheit (38) versehen ist.

2. Vorrichtung (10) zum Zuführen von Probenbehältern (14) mit einer zu behandelnden Analysenprobe (P) zu einem Behandlungsgerät (12) zum Behandeln der Analysenprobe (P), insbesondere zu einer Zentrifuge, mit zumindest
a. zwei Förderer (26, 27) zum Fördern wenigstens eines Probenbehälters (14) oder eines wenigstens einen Probenbehälter (14) enthaltenden Trägers,
b. einer Übergabestation (18) zum Übergeben des Probenbehälters (14) oder des Trägers an einen Förderer (26, 27)
c. einer von der Übergabestation separaten Entnahmestation (20) zur Entnahme des Probenbehälters (14) oder des Trägers aus einem Förderer (26, 27),
d. einer von der Übergabestation separaten Übergabeeinrichtung (44) zum Entnehmen des Probenbehälters (14) oder des Trägers mit Probenbehälter (14) aus einem Förderer (26, 27) zum Weiterführen an das Behandlungsgerät (12) und zum Übergeben an einen Förderer (26, 27) nach dem Behandeln der Analyseprobe (P) des Probenbehälters (14) in dem Behandlungsgerät,
wobei die Förderer (26, 17) zur Aufnahme mehrerer Probenbehälter (14) oder Träger ausgebildet sind und jeweils eine umlaufende Endlosförderbahn bilden, die Förderer (26, 27) horizontal verlaufen, die Übergabestation (18) im Hinblick auf einen horizontal verlaufenden ersten Förderer (26) quer zur Förderrichtung (26b, 27b) des Förderers (26, 27) nach oben versetzt (V1) angeordnet ist, wobei ein Übergabeförderer (28) zum Fördern des der Übergabestation (18) übergebenen Probenbehälters (14) oder des Trägers zu dem ersten Förderer (26) vorgesehen ist und der Übergabeförderer (28) durch eine Fallstrecke (30) gebildet ist, **dadurch gekennzeichnet, dass** einer Identifiziereinheit (38) zum Identifizieren des Probenbehälters (14) vorgesehen ist und an der Übergabestation (18) eine Aufnahme (32) zum Einsetzen des Probenbehälters (14) oder des Trägers vorgesehen ist,
wobei die Aufnahme (32) der Außenform des Probenbehälters (14) oder des Trägers angepasst und durch ein rohrförmiges Aufnahmeteil gebildet ist und die Aufnahme (32) mit einem seitlichen Fenster (36) für die Identifizierung einer Kennzeichnung (K) des Probenbehälters (14) oder des Trägers durch die Identifiziereinheit (38) versehen ist.

3. Vorrichtung nach Anspruch 2, **dadurch gekennzeichnet, dass** der erste horizontale Förderer (26) von der Übergabestation (18) zur Übergabeeinrichtung (44) verläuft.

4. Vorrichtung nach Anspruch 2 oder 3, **dadurch gekennzeichnet, dass** der zweite horizontale Förderer (27) von der Übergabeeinrichtung (44) zur Entnahmestation (20) verläuft und die von der Übergabestation separate Entnahmestation (20) zur Entnahme des Probenbehälters (14) oder des Trägers aus dem zweiten Förderer (26, 27) ausgebildet ist.

5. Vorrichtung nach einem der vorangehenden Ansprüche, **dadurch gekennzeichnet, dass** der oder die Förderer (26, 27) Aufnahmen (26c, 27c) zum Aufnehmen einzelner Probenbehälter (14) oder Träger von Probenbehältern (14) aufweist.

6. Vorrichtung nach Anspruch 5, **dadurch gekennzeichnet, dass** die Aufnahmen (26c, 27c) für den Probenbehälter (14) oder Träger in einer Linie angeordnet sind.

7. Vorrichtung nach einem der vorangehenden Ansprüche, **dadurch gekennzeichnet, dass** die Identifiziereinheit (38) im Bereich des Übergabeförderers (28) angeordnet ist und die Identifiziereinheit (38) mit dem Übergabeförderer (28) so zusammenwirkt, dass der Probenbehälter (14) oder der Träger erst nach seiner Identifizierung zum Förderer (26, 27) gefördert wird.

8. Vorrichtung nach einem der vorangehenden Ansprüche, **dadurch gekennzeichnet, dass** die Übergabestation (18) im Hinblick auf die Entnahmestation (20) nach oben versetzt ist.

9. Vorrichtung nach einem der vorangehenden Ansprüche, **dadurch gekennzeichnet, dass** die Identifiziereinheit (38) benachbart zur Übergabestation (18) angeordnet ist.

10. Vorrichtung nach einem der vorangehenden Ansprüche, **dadurch gekennzeichnet, dass** dem Fenster (36) gegenüberliegend die Identifiziereinheit (38a) angeordnet ist.

11. Vorrichtung nach einem der vorangehenden Ansprüche, **dadurch gekennzeichnet, dass** die Identifiziereinheit (38a) durch ein Lesegerät gebildet ist.

12. Vorrichtung nach einem der vorangehenden Ansprüche, **dadurch gekennzeichnet, dass** eine Halterung (40) vorgesehen ist, in der die Identifiziereinheit (38a) wahlweise entnehmbar gelagert ist.

## Claims

1. Device (10) for feeding sample containers (14) containing an analysis sample (P) to be treated to a treating apparatus (12), in particular a centrifuge, for treating said analysis sample, said device having at least
a) a conveyor for conveying at least one sample container (14) or one carrier containing at least one sample container (14),
b) a transfer station (18) for transferring said sample container (14) or said carrier to said conveyor,
c) a removal station (20), which is separate from said transfer station, for removing said sample container (14) or said carrier from said conveyor,
d) a transfer device (44), which is separate from said transfer station, for removing said sample container (14) or said carrier with said sample container (14) from said conveyor for further transportation to said treating apparatus (12) and for transferring to said conveyor after treatment of the analysis sample (P) of the sample container (14) in the treating apparatus,
e) an identification unit (38) for identifying said sample container (14),
wherein said conveyor is designed to receive multiple sample containers (14) or carriers and forms a circulating endless conveyor track, said conveyor extends horizontally, said transfer station (18) is disposed upwardly offset (V1) from the conveying direction of said conveyor with respect to the horizontally extending conveyor, wherein a transfer conveyor (28) is provided for conveying the sample container (14) or the carrier transferred to the transfer station (18) to said conveyor and that said transfer conveyor (28) is constituted by a drop-down passage (30), and wherein an adapter (32) is provided at the transfer station (18) for inserting the sample container (14) or the carrier, and said adapter (32) is adapted to the outer shape of the sample container (14) or of the carrier and is formed by a tube-like receiving part, wherein the adapter (32) is provided with a lateral window (36) so as to enable the identification unit (38) to identify an identification (K) of the sample container (14).

2. Device (10) for feeding sample containers (18) containing an analysis sample (P) to be treated to a treating apparatus (12), in particular a centrifuge, for treating said analysis sample (P), said device having at least
a) two conveyors (26, 27) for conveying at least one sample container (14) or one carrier containing at least one sample container (14),
b) a transfer station (18) for transferring said sample container (14) or said carrier to a conveyor (26, 27),
c) a removal station (20), which is separate from said transfer station, for removing said sample container (14) or said carrier from a conveyor (26, 27),
d) a transfer device (44), which is separate from said transfer station, for removing said sample container (14) or said carrier holding the sample container (14) from a conveyor (26, 27) for further transportation to the treating apparatus (12) and for a transfer to a conveyor (26, 27) after treatment of the analysis sample (P) of the sample container (14) in the treating apparatus,
wherein said conveyors (26, 17) are designed to receive multiple sample containers (14) or carriers and each form a circulating endless conveyor track, said conveyors (26, 27) extend horizontally, said transfer station (18) is disposed upwardly offset (V1) transversely to the conveying direction (26b, 27b) of said conveyor (26, 27), relative to a horizontally extending first conveyor (26), wherein a transfer conveyor (28) is provided for conveying the sample container (14) or the carrier transferred to the transfer station (18) to said first conveyor (26), and that said transfer conveyor (28) is constituted by a drop-down passage (30), **characterized in that** an identification unit (38) is provided for identifying said sample container (14) and that an adapter (32) is provided at the transfer station (18) for insertion of the sample container (14) or the carrier, wherein said adapter (32) is adapted to the outer shape of said sample container (14) or said carrier and is formed by a tube-like receiving part, and that the adapter (32) is provided with a lateral window (36) so as to enable the identification unit (38) to identify an identification (K) of said sample container (14) or said carrier.

3. Device according to claim 2, **characterized in that** said first horizontal conveyor (26) runs from the transfer station (18) to the transfer device (44).

4. Device according to claim 2 or 3, **characterized in that** said second horizontal conveyor (27) runs from the transfer device (44) to the removal station (20) and that the removal station (20), which is separate from the transfer station, is adapted to enable removal of the sample container (14) or the carrier from said second conveyor (26, 27).

5. Device according to one of the preceding claims, **characterized in that** said one or plural conveyor(s) (26, 27) comprise receiving means (26c, 27c) for receiving single sample containers (14) or carriers of sample containers (14).

6. Device according to claim 5, **characterized in that** the receiving means (26c, 27c) for the sample container (14) or carrier are arranged in a line.

7. Device according to one of the preceding claims, **characterized in that** the identification unit (38) is arranged adjacent to the transfer conveyor (28) and that the identification unit (38) cooperates with the transfer conveyor (28) such that the sample container (14) or carrier will be conveyed to the conveyor (26, 27) only after its identification.

8. Device according to one of the preceding claims, **characterized in that** the transfer station (18) is disposed upwardly offset relative to the removal station (20).

9. Device according to one of the preceding claims, **characterized in that** the identification unit (38) is arranged adjacent to the transfer station (18).

10. Device according to one of the preceding claims, **characterized in that** the identification unit (38a) is arranged opposite the window (36).

11. Device according to one of the preceding claims, **characterized in that** the identification unit (38a) is constituted by a reader.

12. Device according to one of the preceding claims, **characterized in that** a holder (40) is provided in which the identification unit (38a) is supported so as to be selectively removable therefrom.

## Revendications

1. Dispositif (10) pour l'amenée de récipients à échantillon (14) comprenant un échantillon d'analyse à traiter (P) vers un appareil de traitement (12) destiné à traiter l'échantillon d'analyse (P), en particulier vers une centrifugeuse, avec au moins
a) un convoyeur pour le transport d'au moins un récipient à échantillon (14) ou d'un support contenant au moins un récipient à échantillon (14),
b) une station de transfert (18) pour le transfert du récipient à échantillon (14) ou du support au convoyeur,
c) une station de prélèvement (20) séparée de la station de transfert pour le retrait du récipient à échantillon (14) ou du support hors du convoyeur,
d) un dispositif de transfert (44) séparé de la station de transfert pour le retrait du récipient à échantillon (14) ou du support à récipient à échantillon (14) hors du convoyeur pour la remise à l'appareil de traitement (12), et pour le transfert au convoyeur après le traitement de l'échantillon d'analyse (P) du récipient à échantillon (14) dans l'appareil de traitement,
e) une unité d'identification (38) pour l'identification du récipient à échantillon (14), dans lequel le convoyeur est prévu pour la réception de plusieurs récipients à échantillon (14) ou supports et forme un chemin de convoyage en boucle sans fin, le convoyeur s'étend horizontalement, la station de transfert (18) est décalée vers le haut (V1) par rapport au convoyeur s'étendant horizontalement, transversalement à la direction de transport du convoyeur, dans lequel un convoyeur de transfert (28) est prévu pour le transport vers le convoyeur du récipient à échantillon (14) ou du support transféré de la station de transfert (18), et le convoyeur de transfert (28) est formé par une section de chute (30), et
dans lequel une réception (32) pour la mise en place du récipient à échantillon (14) ou du support est prévue sur la station de transfert (18), et la réception (32) est ajustée à la forme extérieure du récipient à échantillon (14) ou du support et est formée par une pièce de réception tubulaire, dans lequel la réception (32) est pourvue d'une fenêtre latérale (36) pour l'identification d'un marquage (K) du récipient à échantillon (14) ou du support par l'unité d'identification (38).

2. Dispositif (10) pour l'amenée de récipients à échantillon (14) avec un échantillon d'analyse à traiter (P) vers un appareil de traitement (12) destiné à traiter l'échantillon d'analyse (P), en particulier vers une centrifugeuse, avec au moins
a) deux convoyeurs (26, 27) pour le transport d'au moins un récipient à échantillon (14) ou d'un support contenant au moins un récipient à échantillon (14),
b) une station de transfert (18) pour le transfert du récipient à échantillon (14) ou du support à un convoyeur (26, 27),
c) une station de prélèvement (20) séparée de la station de transfert pour le retrait du récipient à échantillon (14) ou du support hors d'un convoyeur (26, 27),
d) un dispositif de transfert (44) séparé de la station de transfert, pour le retrait du récipient à échantillon (14) ou du support à récipient à échantillon (14) hors d'un convoyeur (26, 27) pour la remise à l'appareil de traitement (12), et pour le transfert à un convoyeur (26, 27) après le traitement de l'échantillon d'analyse (P) du récipient à échantillon (14) dans l'appareil de traitement,
dans lequel les convoyeurs (26, 17) sont prévus pour la réception de plusieurs récipients à échantillon (14) ou supports et forment chacun un chemin de convoyage en boucle sans fin, les convoyeurs (26, 17) s'étendent horizontalement, la station de transfert (18) est décalée vers le haut (V1) par rapport à un premier convoyeur (26) s'étendant horizontalement, transversalement à la direction de transport (26b, 27b) du convoyeur (26, 27), dans lequel un convoyeur de transfert (28) est prévu pour le transport vers le premier convoyeur (26) du récipient à échantillon (14) ou du support transféré de la station de transfert (18), et le convoyeur de transfert (28) est formé par une section de chute (30),
**caractérisé en ce qu'**une unité d'identification (38) est prévue pour l'identification du récipient à échantillon (14) et **en ce qu'**une réception (32) est prévue sur la station de transfert (18) pour la mise en place du récipient à échantillon (14) ou du support,
dans lequel la réception (32) est ajustée à la forme extérieure du récipient à échantillon (14) ou du support et est formée par une pièce de réception tubulaire, et la réception (32) est pourvue d'une fenêtre latérale (36) pour l'identification d'un marquage (K) du récipient à échantillon (14) ou du support par l'unité d'identification (38).

3. Dispositif selon la revendication 2, **caractérisé en ce que** le premier convoyeur horizontal (26) s'étend de la station de transfert (18) au dispositif de transfert (44).

4. Dispositif selon la revendication 2 ou 3, **caractérisé en ce que** le deuxième convoyeur horizontal (27) s'étend du dispositif de transfert (44) à la station de prélèvement (20) et **en ce que** la station de prélèvement (20) séparée de la station de transfert est prévue pour le retrait du récipient à échantillon (14) ou du support hors du deuxième convoyeur (26, 27).

5. Dispositif selon l'une des revendications précédentes, **caractérisé en ce que** le ou les convoyeurs (26, 27) comprennent des réceptions (26c, 27c) destinées à recevoir différents récipients à échantillon (14) ou supports de récipient à échantillon (14),

6. Dispositif selon la revendication 5, **caractérisé en ce que** les réceptions (26c, 27c) pour le récipient à échantillon (14) ou le support sont disposées en ligne.

7. Dispositif selon l'une des revendications précédentes, **caractérisé en ce que** l'unité d'identification (38) est disposée au niveau du convoyeur de transfert (28) et l'unité d'identification (38) coopère avec le convoyeur de transfert (28) de telle manière que le récipient à échantillon (14) ou le support n'est transporté vers le convoyeur (26, 27) qu'après son identification.

8. Dispositif selon l'une des revendications précédentes, **caractérisé en ce que** la station de transfert (18) est décalée vers le haut par rapport à la station de prélèvement (20).

9. Dispositif selon l'une des revendications précédentes, **caractérisé en ce que** l'unité d'identification (38) est contiguë à la station de transfert (18).

10. Dispositif selon l'une des revendications précédentes, **caractérisé en ce que** l'unité d'identification (38a) est disposée en face de la fenêtre (36).

11. Dispositif selon l'une des revendications précédentes, **caractérisé en ce que** l'unité d'identification (38a) est constituée d'un lecteur.

12. Dispositif selon l'une des revendications précédentes, **caractérisé en ce qu'**un support (40) est prévu, dans lequel l'unité d'identification (38a) est logée de manière à pouvoir en être sélectivement retirée.
